# EUROPEAN PATENT SPECIFICATION

(11) **EP 3 278 384 B1**
(45) Date of publication and mention of the grant of the patent: **14.08.2024**
(21) Application number: 15886858.8
(22) Date of filing: 31.03.2015
(51) Int. Cl.: H01M 4/131, H01M 4/1391, H01M 10/052, C01G 45/02, C01G 45/12, C01G 51/00, C01G 51/04, C01G 51/06, C01G 53/00, C01G 53/04, C01G 53/06, C01B 13/18, C01B 13/36, C01G 1/02, C01B 32/60

(54) **METHOD OF MAKING MIXED LITHIUM OXIDES SUITABLE AS ACTIVE MATERIAL FOR A POSITIVE ELECTRODE IN A LITHIUM ION BATTERY**
VERFAHREN ZUR HERSTELLUNG VON GEMISCHTEN, ALS AKTIVMATERIAL FÜR EINE POSITIVELEKTRODE IN EINER LITHIUM-IONEN-BATTERIE GEEIGNETEN LITHIUMOXIDEN
PROCÉDÉ DE PRÉPARATION D'OXYDES MIXTES DE LITHIUM APPROPRIÉS COMME MATÉRIAU ACTIF D'ÉLECTRODE POSITIVE DANS UNE BATTERIE LITHIUM-ION

(43) Date of publication of application: 07.02.2018
(73) Proprietor: Bayerische Motoren Werke Aktiengesellschaft, 80809 München (DE)
(72) Inventor: WU, Peng, Tianjin 300000 (CN); GENTSCHEV, Ann-Christin, 80637 München (DE); LINTZ, Claudia, 83052 Bruckmüehl (DE); KIM, Sung-Jin, 80995 München (DE); ZHANG, Ning, 80809 München (DE); DETIG-KARLOU, Kamelia, 82049 Pullach (DE); YANG, Wensheng, Beijing 100029 (CN)
(86) International application number: PCT/CN2015/075440
(87) International publication number: WO 2016/154872

(56) References cited:
- CN-A- 101 577 326
- CN-A- 101 847 715
- CN-A- 102 769 142
- CN-A- 103 326 012
- CN-A- 103 413 944
- CN-A- 103 500 825
- No further relevant documents disclosed

## Description

### FIELD OF THE INVENTION

The invention relates to a method of making mixed lithium oxides comprising at least one transition metal, preferably at least one of Ni, Mn, or Co.

### BACKGROUND OF THE INVENTION

It is known to use mixed lithium oxides comprising at least one of Ni, Mn, or Co as active material for a positive electrode in a lithium ion battery. Known processes for the manufacture of such mixed oxides include the preparation of suitable precursors such as oxides of Ni, Mn, or Co, or a mixture of two or more thereof. Said precursors are subsequently subjected to a lithiation reaction in order to obtain the mixed lithium oxides comprising at least one transition metal such as Ni, Mn, or Co, or a mixture of two or more thereof.

For instance, aqueous solutions of Ni, Mn, and/or Co salts such as the sulfates may be reacted with hydroxide ions to result in the respective hydroxides, which, after sintering to the respective oxides, may be further reacted with suitable lithium compounds such as lithium hydroxide to said mixed lithium oxides. Typically, such processes include a mixing step of said Ni, Mn, and/or Co salts such as the sulfates with a suitable base such as hydroxide ions. This mixing step is frequently termed as nucleation step. This nucleation step is accompanied or followed by a step of crystal growth in which a precursor of said mixed lithium oxide is formed. Nucleation and crystal growth may be carried out in parallel in two different reactors, i.e. in a continuous manner, or subsequently, e.g. in a batch process in one reactor.

It is known that the continuous process typically results in a particle size distribution of the respective precursors which is above 11.5 µm (measured as D90, D50 and D10). However, such particle size distribution may negatively affect the properties of the respective mixed lithium oxides in terms of capacity and cycle number of the respective lithium ion battery due to inhomogeneity.

CN 102769142 A discloses an oxygen reduction and oxygen evolution double-effect catalyst and a preparation method thereof used in the technical field of fuel cells. CN 103326012 A discloses preparation methods of a spherical lithium manganate for a lithium-ion power battery and a precursor of the spherical lithium manganate.

### OBJECTS OF THE INVENTION

It is the object of the present invention to develop precursors for mixed lithium oxides comprising at least one transition metal such as Ni, Mn, and/or Co, having improved homogeneity, which in turn allow the manufacture of mixed lithium oxides comprising preferably Ni, Mn, and/or Co also having improved homogeneity. This would support the performance of a cathode comprising said mixed oxide, respectively the performance of a lithium battery comprising said cathode.

### SUMMARY OF THE INVENTION

The inventors of the present invention discovered that the use of a colloid mill in a method of making precursors for mixed lithium oxides comprising at least one transition metal such as Ni, Mn, and/or Co allows the preparation of products having advantageous properties in view of homogeneity over products which are made according to methods discussed in the Background section above. Furthermore, nucleation and crystal growth may be carried out separately from one another, which advantageously may increase throughput of produced precursor.

The invention relates to a method of making a mixed oxide comprising at least Li and M, and optionally further comprising one or more of Al, Si, Mg, and B, wherein M is at least one transition metal, preferably selected from Ni, Mn, or Co, or a mixture of two or more thereof, as defined in claim 1. Accordingly, the method comprises steps (S1) and (S2):
(S1) mixing a composition comprising water and at least one cation of at least one M with a composition comprising water and at least one anion selected from the group consisting of hydroxide, hydrogen carbonate, and carbonate, or a mixture of two or more thereof, in a colloid mill;
(S2) precipitating an oxide or hydroxide or hydrogen carbonate or carbonate, or a mixture of two or more thereof, of M from the milled mixture obtained in step (S1).

In one embodiment, in step (S1) the rotor of the colloid mill is rotated at a speed of from 1,000 to 9,000 rpm.

In one embodiment, in step (S1) the mixing is carried out at a temperature of from 10 °C to 30 °C.

In one embodiment, in step (S2) the temperature is above 30 °C.

In one embodiment, steps (S1) and (S2) are carried out in parallel, wherein the milled mixture obtained in step (S1) is fed to a reactor in which step (S2) is carried out.

The method further comprises step (S3):
(S3) isolating said oxide or hydroxide or hydrogen carbonate or carbonate, or a mixture of two or more thereof, of M precipitated in step (S2).

The method further comprises step (S4):
(S4) sintering the compound isolated in step (S3).

In one embodiment, the method further comprises at least steps (S1') to (S4'):
(S1') mixing a composition comprising water and at least one cation of M with a composition comprising water and a carbonate in a colloid mill;
(S2') precipitating at least a carbonate of M from the milled mixture obtained in step (S1).
(S3') isolating the carbonate of M precipitated in step (S2).
(S4') sintering the carbonate isolated in step (S3).

In one embodiment, the distribution of the particle size (measured in terms of D90, D50 and D10) of the carbonate of M isolated in step (S3) is ≤ 11.5 µm.

Disclosed is a carbonate of M, optionally comprising one or more of Al, Si, Mg, and B, wherein M is at least one transition metal, preferably selected from Ni, Mn, or Co, or a mixture of two or more thereof, wherein the distribution of the particle size (D90, D50 and D10) is ≤ 11.5 µm.

According to the invention, the method of making a mixed oxide comprising at least Li and M, and optionally one or more of Al, Si, Mg, and B, wherein M is at least one transition metal, preferably selected from Ni, Mn, or Co, or a mixture of two or more thereof, comprises at least steps (T1) and (T2):
(T1) mixing a lithium oxide, lithium hydroxide, lithium carbonate or lithium hydrogen carbonate, or a mixture of two or more thereof, with a product obtained according to step (S3) or (S4);
(T2) sintering the mixture obtained in step (T1).

Disclosed is a mixed oxide comprising at least Li and M, and optionally one or more of Al, Si, Mg, and B, wherein M is at least one transition metal, preferably selected from Ni, Mn, or Co, or a mixture of two or more thereof, obtained by the method according to the invention.

Disclosed is a cathode of a lithium ion battery, comprising the mixed oxide obtained in the method according to the invention.

Disclosed is a lithium ion battery, comprising the cathode.

Disclosed is the use of a colloid mill for making a hydroxide, a hydrogen carbonate, a carbonate or an oxide of M, or a mixed oxide comprising at least Li and M, and optionally one or more of Al, Si, Mg and B, wherein M is at least one transition metal, preferably selected from Ni, Mn, or Co, or a mixture of two or more thereof.

### DETAILED DESCRIPTION OF THE INVENTION

The invention relates to a method of making an oxide at least comprising Li and M, and optionally further comprising one or more of Al, Si, Mg, and B, wherein M is at least one transition metal, preferably selected from Ni, Mn, or Co, or a mixture of two or more thereof, as defined in claim 1.

The term *"oxide of M, wherein M at least one transition metal, preferably* se*lected from Ni, Mn, or Co, or a mixture of two or more thereof'* as used in this disclosure encompasses oxides of one or more transition metals.

The term *"transition metal"* as used in this disclosure encompasses the transition metals having atomic numbers of from 21 to 30, 39 to 48, and 71 to 80, as defined in the Periodic Table.

Preferably, the transition metal is selected from transition metals having atomic numbers of from 21 to 30, further preferably from one or more of the following transition metals: Sc, V, Cr, Mn, Fe, Co, Ni or Cu.

More preferably, the transition metal is selected from one or more of the following transition metals: Mn, Fe, Co, Ni or Cu.

Still more preferred, transition metals are selected from one or more of the following: Mn, Co, or Ni.

In one embodiment, the term *"oxide of M, wherein M at least one transition metal, preferably selected from Ni, Mn, or Co, or a mixture of two or more thereof'* encompasses oxides of the individual elements Ni, Mn, or Co.

In another embodiment, the oxide is a mixed oxide of Ni with Mn, or Ni with Co, or Mn with Co, or Mn.

In still another embodiment, the oxide is a mixed oxide of Ni with Mn and Co.

The oxide of M may be doped with one or more compounds of Al, Si, Mg, or B, preferably in the form of oxides.

According to step (S1), a composition comprising water and at least one cation of at least one M is mixed in a colloid mill with a composition comprising water and at least one anion selected from the group consisting of hydroxide, hydrogen carbonate, and carbonate.

The term *"composition comprising water and at least one cation of at least one M"* as used in this disclosure encompasses a water-soluble salt of said at least one M.

The term *"water-soluble salt of M"* as used in this disclosure encompasses any salt of said at least one M having a solubility of at least 1 g per 100 g water.

Preferred salts are inorganic salts such as halogenides, nitrates or sulfates. Organic salts such as formiates or acetates or oxalates may also be used.

The term *"composition comprising at least one anion selected from the group consisting of hydroxide, hydrogen carbonate, and carbonate"* as used in this disclosure encompasses aqueous bases of said hydroxides, hydrogen carbonates and carbonates. Suitable cations are preferably selected from alkali metal such as sodium and potassium. The reaction may also be carried out in the presence of ammonia or organic amines, preferably ammonia. Without being bound by theory, it is believed that ammonia or organic amines act as chelating agents for M, thus supporting in step (S1) solubility of the salt of M in water. This ammonia or amines may also be generated under basic conditions from respective ammonium salts being present in step (S1). Suitable forms of ammonia or amine are ammonia or amine in water, or salts such as ammonium sulfate, ammonium chloride, and ammonium carbonate.

In one embodiment, said composition comprising water and at least one cation of at least one M, and optionally ammonia or an amine, and said composition comprising water and at least one anion selected from the group consisting of hydroxide, hydrogen carbonate, and carbonate are fed separately from one another to said colloid mill in order to be mixed.

In another embodiment, it is possible to combine said composition comprising water and at least one cation of at least one M and said composition comprising water and at least one anion selected from the group consisting of hydroxide, hydrogen carbonate, and carbonate prior to the mixing in said colloid mill.

The term *"colloid mill"* encompasses a device comprising a rotor and stator between which a compound may be subjected to a high shear force. The term *"colloid mill"* has a well-accepted meaning in the art.

In one embodiment, the rotor of the colloid mill in step (S1) is rotated at a speed of from 1,000 to 9,000 rpm, preferably of from 2,000 to 8,000 ppm, more preferred of from 3,000 to 7,000 ppm, still more preferred of from 3,000 to 6,000 ppm or 3,000 to 5,000 rpm.

In one embodiment, the mixing in step (S1) is carried out at a temperature of from 10 °C to 30 °C.

In one embodiment, said composition comprising water and at least one cation of at least one M, and said composition comprising water and at least one anion selected from the group consisting of hydroxide, hydrogen carbonate, and carbonate, are fed separately from one another to said colloid mill at a rate of from 30-40 mL/min, wherein the rotating speed of the rotor of said colloid mill is in the range of from 3,000-5,000 rpm, and the reaction temperature is in the range of from 15-25 °C.

Step (S1) according to the invention may be regarded as a nucleation step.

Typically, if in step (S2) the temperature is raised above 30 °C, a water-insoluble compound starts precipitating. Preferably, said compound is an oxide, a hydroxide, a hydrogen carbonate or a carbonate of said at least one M, or a mixture of two or more thereof.

In one embodiment, the temperature of step (S2) is ≥ 30 °C, preferably in the range of from 35 to 80 °C, more preferred of from 40 to 70 °C.

In one embodiment, the milled mixture generated in step (S1) is fed in step (S2) to a stirred reactor at a feeding rate of from 5-10 mL/min and a stirring rate of from 900 rpm, wherein the temperature is kept in a range of from 40 to 50 °C.

Said step (S2) may be regarded as a step of crystal growth.

In one embodiment, steps (S1) and (S2) may be carried out in parallel. The term *"in parallel"* means that both steps are carried out simultaneously, i.e. in different reactors. Thus, the reaction sequence according to steps (S1) and (S2) may be carried out in a continuous manner, wherein the milled mixture obtained in step (S1) is fed to a reactor in which step (S2) is carried out.

In another embodiment, step (S2) may be carried out subsequently to step (S1). Accordingly, the sequence may be carried out as a batch process wherein steps (S1) and (S2) are carried out in the same reactor.

The method further comprises step (S3):
(S3) isolating said water-insoluble compound precipitated in step (S2).

Said isolation according to step (S3) may be carried out according to methods which are well known in the art. Preferably, said isolation may be performed by filtration or centrifugation.

The method further comprises step (S4): (S4) sintering the compound isolated in step (S3).

Step (S4) removes water and, if carbonates and/or hydrocarbonates are present in the product formed in step (S3), carbon dioxide.

Suitable sintering temperatures are ≥ 100 °C, preferably in the range of from 200 to 900 °C, more preferred from 300 to 800 °C, still more preferred from 400 to 700 °C. In one embodiment, said sintering may be carried out in a suitable device such as a muffle furnace.

In one embodiment, sintering is performed for a period of time in the range of from 4 to 10 h such as 6 h.

If desired, sintering may be carried out in air or oxygen. This further supports the formation of oxides.

In one embodiment, further suitable compounds used as dopants based on compounds selected from Al, Si, Mg, and B compounds may be present in any one of steps (S1), (S2), (S3), or (S4). Suitable compounds are e.g. oxides. Respective halogenides e.g. may be added to step (S1) or (S2).

In a specific embodiment, the method according to the invention comprises:
(S1') mixing a composition comprising water and at least one cation of M with a composition comprising water and a carbonate in a colloid mill;
(S2') precipitating at least a carbonate of M from the milled mixture obtained in step (S1).

Preferably, a sulfate or halogenide or nitrate or oxalate of M is employed in step (S1).

Preferably, the carbonate used in step (S2) is sodium carbonate or ammonium carbonate or a mixture thereof.

This specific embodiment further comprises step (S3'):
(S3) isolating the carbonate of M precipitated in step (S2').

This specific embodiment further comprises step (S4'):
(S4) sintering the carbonate isolated in step (S3').

The oxide obtained in step (S4) according to the invention has a very homogeneous particle size distribution. In one embodiment, said particle size distribution (measured as D90, D50 and D10 via laser diffraction as is common in the art) is ≤ 11.5 µm or ≤ 11.0 µm. Said particle size distribution is advantageously improved over the respective distribution of a product which has been prepared according to a process as defined in the Background section. If such a product is prepared according to the referenced continuous method, the respective distribution is about 20 µm, and about 12 µm according to the batch process known in the art.

Disclosed is a carbonate of M, wherein M is at least one transition metal, preferably selected from Ni, Mn, or Co, or a mixture of two or more thereof, wherein the distribution of the particle size (D90, D50 and D10) is ≤ 11.5 µm or ≤ 11.0 µm.

In order to obtain a mixed oxide comprising at least Li and M, wherein M is at least one transition metal, preferably selected from Ni, Mn, or Co, or a mixture of two or more thereof, the oxide obtained in step (S4) or the carbonate obtained in step (S3) is mixed with a suitable lithium compound. Subsequently to the mixing, the generated composition is subjected to a sintering step.

In one embodiment, the product isolated in step (S3) may be subjected to a lithiation reaction.

In another embodiment, the product sintered in step (S4) may be subjected to a lithiation reaction.

Suitable lithium compounds for lithiation are preferably selected from lithium oxide, lithium hydroxide, lithium carbonate, or lithium hydrogen carbonate, or a mixture of two or more thereof. The compounds may be employed in hydrated form. In one embodiment, lithium hydroxide may be employed in hydrated form such as Li-OH*H₂O.

Thus, the invention relates to a method of making a mixed oxide comprising at least Li and at least one M, and optionally one or more of Al, Si, Mg, and B, wherein M is at least one transition metal, preferably selected from Ni, Mn, or Co, or a mixture of two or more thereof, from the oxide obtained according to step (S4) or from the carbonate obtained according to step S3), comprising:
(T1) mixing a lithium oxide, lithium hydroxide, lithium carbonate or lithium hydrogen carbonate, or a mixture of two or more thereof, with a product obtained according to step (S3) or (S4);
(T2) sintering the mixture obtained in step (T1).

In one embodiment, sintering according to step (T2) is carried out at a temperature ≥ 500 °C, preferably of from 500 to 1,500 °C, more preferred of from 600 to 1,400 °C, and still more preferred of from 700 to 1,100 °C. In one embodiment, sintering is performed at a temperature of 900 °C.

In one embodiment, further suitable compounds used as dopants based on compounds selected from Al, Si, Mg, and B compounds may be present in any one of steps (T1) or (T2). Suitable compounds are e.g. oxides.

Accordingly, in one embodiment, the invention relates to a method of making a mixed oxide comprising at least Li and M, and optionally one or more of Al, Si, Mg, and B, wherein M is at least one transition metal, preferably selected from Ni, Mn, or Co, or a mixture of two or more thereof, comprising:
(S1) mixing a composition comprising water and at least one cation of at least one M with a composition comprising water and at least one anion selected from the group consisting of hydroxide, hydrogen carbonate, or carbonate, or a mixture of two or more thereof, in a colloid mill;
(S2) precipitating an oxide or hydroxide or hydrogen carbonate or carbonate, or a mixture of two or more thereof, of M from the milled mixture obtained in step (S1);
(S3) isolating said water-insoluble compound precipitated in step (S2);
(S4) sintering the compound isolated in step (S3);
(T1) mixing a lithium oxide, lithium hydroxide, lithium carbonate or lithium hydrogen carbonate, or a mixture of two or more thereof, with a product obtained according to step (S3) or (S4);
(T2) sintering the mixture obtained in step (T1).

The mixed oxide obtained according to the method of the invention has improved homogeneity due to the homogeneous precursor used as starting material compared to the known respective precursors.

Accordingly, disclosed is a mixed oxide comprising at least Li and M, wherein M is at least one transition metal, preferably selected from Ni, Mn, or Co, or a mixture of two or more thereof, obtained by the method according to the invention.

The mixed oxide comprising at least Li and M, wherein M is at least one transition metal, preferably selected from Ni, Mn, or Co, or a mixture of two or more thereof, obtained according to the method of the invention may be processed as an active material for a cathode of a lithium ion battery.

The term *"active material"* as used in this disclosure encompasses the material which reversibly may absorb or may release lithium ions.

The term *"cathode"* as used in this disclosure encompasses the electrode which may absorb electrons upon discharging the battery.

The term *"lithium ion battery"* as used in this disclosure encompasses terms such as *"lithium battery", "secondary lithium ion battery",* or *"lithium ion accumulator",* i.e. a rechargeable lithium ion battery.

Thus, disclosed is a cathode of a lithium ion battery, comprising the mixed oxide obtained in the method according to the invention.

Disclosed is a lithium ion battery comprising said cathode.

Disclosed is the use of a colloid mill for making a hydroxide, a hydrogen carbonate or a carbonate or an oxide of M, or a mixed oxide comprising at least Li and M, wherein M is at least one transition metal, preferably selected from Ni, Mn, or Co, or a mixture of two or more thereof.

## Claims

1. Method of making a mixed oxide comprising at least Li and M, and optionally one or more of Al, Si, Mg, and B, wherein M is at least one transition metal, preferably selected from Ni, Mn, or Co, or a mixture of two or more thereof, the method comprising steps (S1) to (S3), optionally step (S4), and steps (T1) and (T2):
(S1) mixing a composition comprising water and at least one cation of at least one M with a composition comprising water and at least one anion selected from the group consisting of hydroxide, hydrogen carbonate, and carbonate, or a mixture of two or more thereof, in a colloid mill;
(S2) precipitating an oxide or hydroxide or hydrogen carbonate or carbonate, or a mixture of two or more thereof, of M from the milled mixture obtained in step (S1);
(S3) isolating said oxide or hydroxide or hydrogen carbonate or carbonate, or a mixture of two or more thereof, of M precipitated in step (S2);
(S4) sintering the compound isolated in step (S3);
(T1) mixing a lithium oxide, lithium hydroxide, lithium carbonate or lithium hydrogen carbonate, or a mixture of two or more thereof, with a product obtained according to step (S3) or (S4);
(T2) sintering the mixture obtained in step (T1).

2. Method of claim 1, wherein in step (S1) the rotor of the colloid mill is rotated at a speed of from 1,000 to 9,000 rpm.

3. Method of claim 1 or 2, wherein in step (S1) the mixing is carried out at a temperature of from 10 °C to 30 °C,

4. Method of any one of the preceding claims, wherein in step (S2) the temperature is above 30 °C.

5. Method of any one of the preceding claims, wherein steps (S1) and (S2) are carried out in parallel, wherein the milled mixture obtained in step (S1) is fed to a reactor in which step (S2) is carried out.

6. Method of any one of the preceding claims, comprising at least steps (S1') to (S4'):
(S1') mixing a composition comprising water and at least one cation of M with a composition comprising water and a carbonate in a colloid mill;
(S2') precipitating at least a carbonate of M from the milled mixture obtained in step (S1').
(S3') isolating the carbonate of M precipitated in step (S2').
(S4') sintering the carbonate isolated in step (S3').

## Patentansprüche

1. Verfahren zur Herstellung eines Mischoxids, das mindestens Li und M und gegebenenfalls eines oder mehrere von Al, Si, Mg und B umfasst, wobei M mindestens ein Übergangsmetall, vorzugsweise ausgewählt aus Ni, Mn oder Co, oder ein Gemisch von zwei oder mehreren davon ist, wobei das Verfahren die Schritte (S1) bis (S3), gegebenenfalls Schritt (S4), und die Schritte (T1) und (T2) umfasst:
(S1) Mischen einer Zusammensetzung, die Wasser und mindestens ein Kation von mindestens einem M enthält, mit einer Zusammensetzung, die Wasser und mindestens ein Anion enthält, das aus der Gruppe ausgewählt ist, die aus Hydroxid, Hydrogencarbonat und Carbonat oder einem Gemisch von zwei oder mehreren davon besteht, in einer Kolloidmühle;
(S2) Ausfällen eines Oxids oder Hydroxids oder Hydrogencarbonats oder Carbonats oder eines Gemischs von zwei oder mehr davon von M aus dem in Schritt (S1) erhaltenen gemahlenen Gemisch;
(S3) Isolieren des in Schritt (S2) ausgefällten Oxids oder Hydroxids oder Hydrogencarbonats oder Carbonats oder eines Gemischs aus zwei oder mehr davon von M;
(S4) Sintern der in Schritt (S3) isolierten Verbindung;
(T1) Mischen eines Lithiumoxids, Lithiumhydroxids, Lithiumcarbonats oder Lithiumhydrogencarbonats oder eines Gemischs aus zwei oder mehreren davon mit einem gemäß Schritt (S3) oder (S4) erhaltenen Produkt;
(T2) Sintern der in Schritt (T1) erhaltenen Mischung.

2. Verfahren nach Anspruch 1, wobei in Schritt (S1) der Rotor der Kolloidmühle mit einer Geschwindigkeit von 1.000 bis 9.000 U/min gedreht wird.

3. Verfahren nach Anspruch 1 oder 2, wobei in Schritt (S1) das Mischen bei einer Temperatur von 10 °C bis 30 °C durchgeführt wird,

4. Verfahren nach einem der vorhergehenden Ansprüche, wobei in Schritt (S2) die Temperatur über 30 °C liegt.

5. Verfahren nach einem der vorhergehenden Ansprüche, wobei die Schritte (S1) und (S2) parallel durchgeführt werden, wobei das in Schritt (S1) erhaltene gemahlene Gemisch einem Reaktor zugeführt wird, in dem der Schritt (S2) durchgeführt wird.

6. Verfahren nach einem der vorhergehenden Ansprüche, umfassend mindestens die Schritte (S1') bis (S4'):
(S1') Mischen einer Zusammensetzung, die Wasser und mindestens ein Kation von M enthält, mit einer Zusammensetzung, die Wasser und ein Karbonat enthält, in einer Kolloidmühle;
(S2') Ausfällen von mindestens einem Carbonat von M aus der in Schritt (S1) erhaltenen gemahlenen Mischung;
(S3') Isolieren des in Schritt (S2) ausgefällten Karbonats von M;
(S4') Sintern des in Schritt (S3) isolierten Karbonats.

## Revendications

1. Procédé de fabrication d'un oxyde mixte comprenant au moins Li et M, et éventuellement un ou plusieurs Al, Si, Mg et B, dans lequel M est au moins un métal de transition, de préférence choisi parmi Ni, Mn ou Co, ou un mélange d'au moins deux d'entre eux, le procédé comprenant les étapes (S1) à (S3), éventuellement l'étape (S4), et les étapes (T1) et (T2) :
(S1) mélanger une composition comprenant de l'eau et au moins un cation d'au moins un M avec une composition comprenant de l'eau et au moins un anion choisi dans le groupe constitué de l'hydroxyde, de l'hydrogénocarbonate et du carbonate, ou un mélange de deux ou plusieurs d'entre eux, dans un broyeur colloïdal ;
(S2) précipiter un oxyde ou un hydroxyde ou un hydrogénocarbonate ou un carbonate, ou un mélange de deux ou plusieurs d'entre eux, de M à partir du mélange broyé obtenu à l'étape (S1) ;
(S3) isoler ledit oxyde ou hydroxyde ou hydrogénocarbonate ou carbonate, ou un mélange de deux ou plus d'entre eux, de M précipité à l'étape (S2) ;
(S4) frittage du composé isolé à l'étape (S3) ;
(T1) mélange d'un oxyde de lithium, d'un hydroxyde de lithium, d'un carbonate de lithium ou d'un hydrogénocarbonate de lithium, ou d'un mélange d'au moins deux d'entre eux, avec un produit obtenu selon l'étape (S3) ou (S4) ;
(T2) frittage du mélange obtenu à l'étape (T1).

2. Méthode de la revendication 1, dans laquelle, à l'étape (S1), le rotor du broyeur colloïdal tourne à une vitesse comprise entre 1 000 et 9 000 tours/minute.

3. Méthode de la revendication 1 ou 2, dans laquelle, à l'étape (S1), le mélange est effectué à une température comprise entre 10 °C et 30 °C,

4. Procédé selon l'une quelconque des revendications précédentes, dans lequel, à l'étape (S2), la température est supérieure à 30 °C.

5. Méthode selon l'une quelconque des revendications précédentes, dans laquelle les étapes (S1) et (S2) sont effectuées en parallèle, le mélange broyé obtenu à l'étape (S1) étant introduit dans un réacteur dans lequel l'étape (S2) est effectuée.

6. Procédé selon l'une quelconque des revendications précédentes, comprenant au moins les étapes (S1') à (S4') :
(S1') mélange d'une composition comprenant de l'eau et au moins un cation de M avec une composition comprenant de l'eau et un carbonate dans un moulin colloïdal ;
(S2') précipiter au moins un carbonate de M à partir du mélange broyé obtenu à l'étape (S1).
(S3') isoler le carbonate de M précipité à l'étape (S2).
(S4') frittage du carbonate isolé à l'étape (S3).
